# EUROPEAN PATENT APPLICATION

(11) **EP 4 838 371 A1**
(43) Date of publication of application: **11.11.2026**
(21) Application number: 25305662.6
(22) Date of filing: 09.05.2025
(51) Int. Cl.: G06F 16/21, G06F 16/23

(54) **METHODS AND SYSTEMS FOR VERSIONING OF EPHEMERAL AGGREGATED DATA RECORDS**

(71) Applicant: Amadeus S.A.S., 06410 Biot (FR)
(72) Inventor: BISEGNA, Tony, 06220 Vallauris (FR); AZEMARD, Laurent, 06200 Nice (FR); JEBARI, Reda, 06270 Villeneuve-Loubet (FR); ROSSO, Louis Charles Jacques, 06950 FALICON (FR); NOLIN, Alois Flavien Tom, 06130 Grasse (FR)
(74) Representative: Samson & Partner Patentanwälte mbB

(57) **Abstract**

A method comprising: obtaining, via a computing device at a database, different versions of two or more associated data objects when their respective elements change, each changed element stored with a version number of the data object at which the change occurred; as versions are created, generating, via the computing device at the database, metadata versions representing aggregated data object versions that combine the respective elements of the associated data objects, wherein a latest metadata version includes identifiers of the elements and their associated aggregated data object version numbers where changes occurred; generating a latest version of the aggregated data object using the latest metadata version; providing the latest aggregated data object version to an applications computing device that uses the respective elements and aggregated version numbers; and subsequently deleting the latest aggregated data object version via the computing device.

## Description

### FIELD

The specification relates generally to handling data records, and specifically to methods and systems for versioning of ephemeral aggregated data records.

### BACKGROUND

Certain classes of products, including for example travel-related goods and services, may include a number of different types of products, e.g., flights, hotel reservations, automobile rentals, and the like. Multiple products within a class may be purchased in association with each other by a given user, such as one or more flights and a hotel reservation for a given trip or itinerary.

The individual products, however, may be provided by discrete supplier entities (e.g., airlines, hotels and the like) using distinct data-exchange infrastructure to store and communicate data defining the above-mentioned products. In other words, products may be represented by different record types, with each record type being stored and manipulated using a particular record identifier, by distinct computing infrastructure than other records and/or record types.

Retrieving and modifying data defining the above-mentioned products may involve communicating with the supplier entities (e.g., by a user or an entity acting on behalf of the user, such as a travel agency in the context of travel-related products) using various distinct communication protocols, message content formats, update mechanisms, and the like. Certain systems may provide intermediation services that permit a client system (e.g., operated by the above-mentioned travel agency) to view and manipulate records of different types as though the content therein is contained in a single aggregated record. The presentation of such data in aggregated form, however, may obfuscate the update history of the underlying source data, which can complicate or prevent certain supplier processes and/or prevent diagnosis of errors in the underlying data.

### SUMMARY

Examples described herein relate to a method comprising: obtaining, via a computing device, at a database, different respective versions of two or more associated data objects when respective elements thereof are changed, an element of the different respective versions of the two or more associated data objects stored with a respective version number of a respective data object at which the element was changed; as the different respective versions are generated, generating, via the computing device, at the database, versions of metadata representing associated versions of an aggregated data object that combines the respective elements of the two or more associated data objects, a latest version of the metadata comprising identifiers of the respective elements stored in association with respective aggregated data object version numbers of an aggregated data object version at which the respective elements were changed; generating, via the computing device, a respective latest version of the aggregated data object from the latest version of the metadata; providing, via the computing device, the respective latest version of the aggregated data object, to an applications computing device that relies on the respective elements and the respective aggregated data object version numbers; and, thereafter, deleting, via the computing device, the respective latest version of the aggregated data object.

The method may further comprise: comparing the latest version of the metadata to version processing requirements of the applications computing device, wherein generating of the respective latest version of the aggregated data object, and providing the respective latest version of the aggregated data object to the applications computing device occurs in response to the latest version of the metadata meeting the version processing requirements.

The method may further comprise: receiving an update corresponding to the aggregated data object; generating, at the database, a new version of the metadata that includes the update stored in association with a new aggregated data object version number; and generating, at the database, latest respective versions of at least one of the two or more associated data objects that incorporate the update stored in association with a respective new version number of the at least one of the two or more associated data objects.

Receiving the update may include: receiving an update to one of the associated data objects.

Receiving the update may include: receiving an update to the aggregated data object.

The method may further comprise: storing the metadata within at least one of the associated data objects.

Further examples described herein relate to a computing device, comprising: a memory storing a database; a processor configured to: obtain different respective versions of two or more associated data objects when respective elements thereof are changed, an element of the different respective versions of the two or more associated data objects stored with a respective version number of a respective data object at which the element was changed; as the different respective versions are generated, generate, at the database, versions of metadata representing associated versions of an aggregated data object that combines the respective elements of the two or more associated data objects, a latest version of the metadata comprising identifiers of the respective elements stored in association with respective aggregated data object version numbers of an aggregated data object version at which the respective elements were changed; generate a respective latest version of the aggregated data object from the latest version of the metadata; provide the respective latest version of the aggregated data object, to an applications computing device that relies on the respective elements and the respective aggregated data object version numbers; and, thereafter, delete the respective latest version of the aggregated data object.

The processor may be configured to: compare the latest version of the metadata to version processing requirements of the applications computing device, generate the respective latest version of the aggregated data object, and provide the respective latest version of the aggregated data object to the applications computing device, in response to the latest version of the metadata meeting the version processing requirements.

The processor may be configured to: receive an update corresponding to the aggregated data object; generate, at the database, a new version of the metadata that includes the update stored in association with a new aggregated data object version number; and generate at the database, latest respective versions of at least one of the two or more associated data objects that incorporate the update stored in association with a respective new version number of the at least one of the two or more associated data objects.

The processor may be configured to receive the update by: receiving an update to one of the associated data objects.

The processor may be configured to receive the update by: receiving an update to the aggregated data object.

The processor may be configured to: store the metadata within at least one of the associated data objects.

### BRIEF DESCRIPTIONS OF THE DRAWINGS

Embodiments are described with reference to the following figures.
FIG. 1 is a diagram illustrating a system for handling data records.
FIG. 2 is a diagram illustrating certain internal components of the aggregator server of FIG. 1.
FIG. 3 is a flowchart of a method of versioning ephemeral aggregated data records in the system of FIG. 1.
FIG. 4 is a diagram illustrating example contents of source data records for use in the method of FIG. 3.
FIG. 5 is a diagram of an example performance of block 335 of the method of FIG. 3.
FIG. 6 is a diagram of an example performance of blocks 315 and 320 of the method of FIG. 3.
FIG. 7 is a diagram of another example performance of blocks 315 and 320 of the method of FIG. 3.

### DETAILED DESCRIPTION

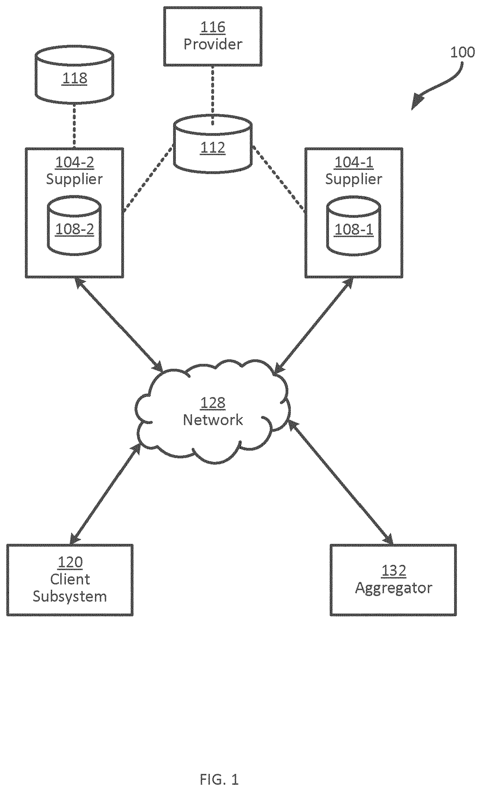

FIG. 1 depicts a system 100 for handling data records. Data records, which may also be referred to as data objects herein, can define products such as travel-related goods and services such as flights, hotel reservations, vehicle rentals, and related services (e.g., baggage check services for flights, lounge access at airports, wireless network access on flights or at hotels, and so on). As will be apparent to those skilled in the art, however, the systems and methods discussed below can also be applied to various other types of data objects (that is, data objects defining a wide variety of other forms of products).

Delivery of the above-mentioned products to customers can be implemented by a provider entity, such as an airline for flights, a rental agency for vehicle rentals, and the like. Prior to delivery of the products to customers (e.g., passengers on a flight), the products are purchased or otherwise secured on behalf of the customers, via a series of data exchanges. To that end, the system 100 includes one or more supplier subsystems, of which two examples 104-1 and 104-2 are shown. The supplier subsystems 104-1 and 104-2 are also collectively referred to as the supplier subsystems 104, or simply the suppliers 104, and may be referred to generically as a supplier 104. Similar nomenclature may also be used for other elements identified herein with reference numbers that include hyphenated suffixes. Data objects maintained by or on behalf of each supplier 104 define the products available for purchase, or already purchased, from the supplier 104. The above-mentioned data objects can also be referred to as a supplier data objects or supplier records, or as source data objects or source records, in the discussion below.

The supplier subsystems 104 can be, but are not required to be, operated by the above-mentioned providers. For example, the supplier 104-1 is operated in the present example by an airline (that is, a provider entity). For instance, the supplier 104-1 may exchange data with other components of the system 100 to enable the provision of products according to the eXtensible Markup Language (XML)-based New Distribution Capability (NDC) standard. Such products may be referred to as being obtained via an NDC distribution channel. The supplier 104-1, in this example, maintains a repository 108-1 defining product inventory, such as flights operated by the airline that are available for booking, or that have been booked.

Other supplier subsystems 104 can be operated by third parties not directly responsible for the provision of the products to customers. For example, the supplier 104-2, in the present example, is a Global Distribution System (GDS) operated by a third party distinct from the provider entities (e.g., the airlines, in this example). Products obtained via the supplier 104-2 can be referred to as being obtained via a GDS distribution channel. The supplier 104-2 maintains a repository 108-2 defining product inventory and/or bookings. The supplier 104-2 can retrieve data for the repository 108-2 from various other components of the system 100, including, for example, a Central Reservation System (CRS) 112 containing inventory data for a further provider 116 (e.g. another airline), and a pricing or tariff repository 118. As indicated by the dashed lines in FIG. 1, the CRS 112 can also contain inventory data retrieved from the supplier 104-1 itself. That is, the provider operating the supplier subsystem 104-1 can arrange for the provision of products through more than one distribution channel.

The system 100 can include a wide variety of additional supplier subsystems 104, including additional GDS subsystems, and/or additional provider-operated subsystems. For example, the system 100 can include a further subsystem (not shown) configured to store and distribute data records corresponding to low-cost carrier airlines. Such a subsystem can operate as a GDS subsystem, and/or according to another distribution channel (e.g., Extended Air Choice or EAC).

The system 100 also includes a client subsystem 120, for example operated by a travel agency, individual customer, or the like. The system 100 can include more than one client subsystem 120 in other examples. The client subsystem 120 can be configured to interact with the supplier subsystems 104 via a network 128, including any suitable combination of local- and wide-area networks. Interactions between the client subsystem 120 and the supplier subsystems 104 can lead to the generation of data records, such as passenger name records (PNRs). A PNR can contain data defining one or more products booked for one or more travelers (e.g., individual persons).

The client subsystem 120 may interact with a number of different supplier subsystems 104 on behalf of any given customer. Each supplier subsystem 104 may store and exchange supplier data objects in distinct formats, e.g., according to the distribution channel implemented by the supplier subsystem 104. The supplier subsystems 104 may also, for example based on which distribution channel(s) they implement, provide different update mechanisms for making bookings and/or subsequently modifying bookings. A travel itinerary that includes a set of travel-related products that are associated with the same traveler or set of travelers and with the same trip to be taken by those travelers may therefore be represented by multiple data records. For example, part of the itinerary may be defined in a GDS-based data record from the supplier subsystem 104-2, and another part of the itinerary may be defined in an NDC-based data from the supplier subsystem 104-1.

The fragmented (in terms of controlling supplier 104) and/or heterogeneous (in terms of data record formats and processing mechanisms) nature of the records generated by the suppliers 104 may impose a substantial technical burden on the client subsystem 120 (and any other client subsystems in the system 100). For example, the client subsystem 120 may be required to implement communication mechanisms to interact with each supplier subsystem 104. Even when such communication mechanisms are implemented at the client subsystem 120, viewing an itinerary defined by multiple records, such as an NDC record and a GDS record as noted above, may be obstructed at the client subsystem 120 by the need to switch between retrieving and displaying the relevant records separately from one another, such that only a portion of the itinerary is viewable at a time. Rendering of information for the itinerary at the client subsystem 120 may therefore be inconsistent, and the available update mechanisms may vary for different portions of an itinerary. The above-noted inconsistencies between different portions of an itinerary may cause erroneous or malformed purchase or other update requests to be transmitted to the supplier subsystems 104 by the client subsystem 120.

The system 100 also includes an intermediate subsystem, referred to as an aggregator server 132 or aggregator 132, in communication with the client subsystem 120 and the suppliers 104 via the network 128. The aggregator 132 can retrieve data corresponding to an itinerary from one or more suppliers 104, and present that data to the client subsystem 120 as a single record. For example, the aggregator 132 can retrieve distinct data records from the suppliers 104-1 and 104-2, representing different portions of an itinerary, and present a combined data record to the client subsystem 120. The client subsystem 120 may therefore be relieved of the need to implement multiple communications protocols, data formats, and the like. The aggregator 132 can also, in some systems, implement distinct update mechanisms for each supplier 104, enabling the client subsystem 120 to request modifications to the itinerary. The aggregator 132 can translate the requested modifications and relay them to the relevant suppliers 104, substantially transparently to the client subsystem 120.

The presentation of combined data records (which may also be referred to as mixed data records, or aggregated data records) by the aggregator 132 can be achieved by establishing links between the individual data records (e.g., as provided by the suppliers 104) at the aggregator 132, and providing the client subsystem 120 with a record identifier corresponding to an aggregated data record. The aggregator 132 can use the links to reconstruct the mixed itinerary for presentation to the client subsystem 120. In other words, the client subsystem 120 can interact with the aggregator 132 without awareness of the individual records contributing to the itinerary. The aggregated data record, however, is not stored persistently at the aggregator 132 or the suppliers 104. The aggregated data record is instead a virtual, or ephemeral, data record, that is generated by the aggregator only in response to requests from the client subsystem 120, and discarded by the aggregator 132 upon presentation to the client subsystem 120. The aggregated data record is not maintained persistently because the disparate sources of the data contained therein may require that different portions of the data appearing in the aggregated record be handled differently.

Although the presentation of a virtual aggregated data record to the client subsystem 120 by the aggregator 132 facilitates management of a multi-component travel itinerary (or any other data construct that is actually defined by multiple "real" data records maintained at the suppliers 104) at the client subsystem 120, the virtual aggregated data record introduces certain technical challenges. For example, the source data records created and updated by the suppliers 104 may be versioned, e.g., such that a certain number of historical version of each data record are available for issue diagnosis, logging, and/or other functions. An aggregated data object is defined by multiple source data objects, each of which may be updated a different times, in unpredictable sequences. It may therefore be difficult or impossible to generate a version history for the aggregated object itself. Processing mechanisms that are dependent on versioning may therefore be rendered inoperable with respect to aggregated data objects.

Certain technical approaches to the above technical challenges may be prohibitively complex and/or costly. For example, configuring the aggregator 132 to persistently store multiple versions of the aggregated data objects may allow precise traceability of changes within the aggregated data objects, but may also impose a substantial storage and computation burden on the aggregator 132. As a further example, configuring the aggregator 132 to retrieve version numbers and timestamps associated with the source data objects may permit the aggregator 132 to reconstruct a version history of an ephemeral aggregated data object. Such timestamp information may not be consistently available, however, and the computational burden involved in performing such reconstruction may be impractical, particularly at the scale the system 100 may operate (e.g., there may be millions of aggregated data records).

The aggregator 132 is therefore configured, as discussed below, to implement a versioning mechanism for the aggregated data objects that permits precise historical tracking of changes to an aggregated data object, without persistent storage of the aggregated data object and with a relatively small computational and storage load, compared to the solutions noted above.

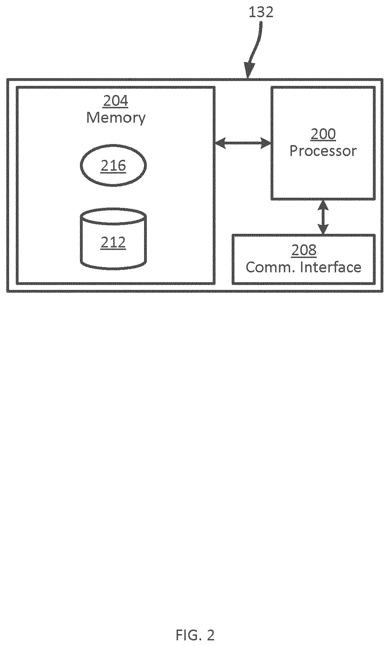

Turning to FIG. 2, before discussing the functionality of the system 100 in greater detail, certain components of the aggregator 132 will be discussed in greater detail. As shown in FIG. 2, the aggregator 132 is implemented as a computing device including at least one processor 200, such as a central processing unit (CPU) or the like. The processor 200 is interconnected with a memory 204, implemented as a suitable non-transitory computer-readable medium (e.g. a suitable combination of non-volatile and volatile memory subsystems including any one or more of Random Access Memory (RAM), read only memory (ROM), Electrically Erasable Programmable Read Only Memory (EEPROM), flash memory, magnetic computer storage, and the like). The processor 200 and the memory 204 are generally comprised of one or more integrated circuits (ICs).

The processor 200 is also interconnected with a communication interface 208, which enables the aggregator 132 to communicate with the other computing devices of the system 100 (e.g., supplier subsystems 104 and client subsystems 120) via the network 128. The communication interface 208 therefore includes any necessary components (e.g., network interface controllers (NICs), radio units, and the like) to communicate via the network 128. The specific components of the communication interface 208 are selected based on the nature of the network 128. The aggregator 132 can also include input and output devices connected to the processor 200, such as keyboards, mice, displays, and the like (not shown).

The components of the aggregator 132 mentioned above can be deployed in a single enclosure, or in a distributed format. In some examples, therefore, the aggregator 132 includes a plurality of processors, either sharing the memory 204 and communication interface 208, or each having distinct associated memories and communication interfaces.

The memory 204 can store a repository 212 containing copies of the source data records mentioned above, e.g., synchronized with records in the repositories 108. The repository 212, as well as the repositories 108, 112, and 118, can each be implemented according to any suitable database infrastructure, a wide variety of examples of which will occur to those skilled in the art. In some examples, the aggregator 132 can implement hosting functionality for the suppliers 104, such that the repository 212 and/or additional repositories maintained by the aggregator 132 host the source data records directly, rather than containing copies of those records synchronized with other repositories. As discussed in detail below, the repository 212 also contains metadata employed to generate aggregated data records, and implement the above-mentioned versioning functionality.

The memory 204 also stores a plurality of computer-readable programming instructions, executable by the processor 200, in the form of various applications, including a record processing application 216. As will be understood by those skilled in the art, the processor 200 executes the instructions of the application 216 (and any other suitable applications) in order to perform various actions defined by the instructions contained therein. In the description below, the processor 200, and more generally the aggregator 132, are said to be configured to perform those actions. It will be understood that they are so configured via the execution (by the processor 200) of the instructions of the applications stored in memory 204. Execution of the application 216, as will be discussed below, configures the aggregator 132 to generate and modify metadata associating source data records to present versioned aggregated data records to the client subsystem 120. In other embodiments, the application 216 can be implemented using preprogrammed hardware or firmware elements (e.g., application specific integrated circuits (ASICs), electrically erasable programmable read-only memories (EEPROMs), etc.), or other related components.

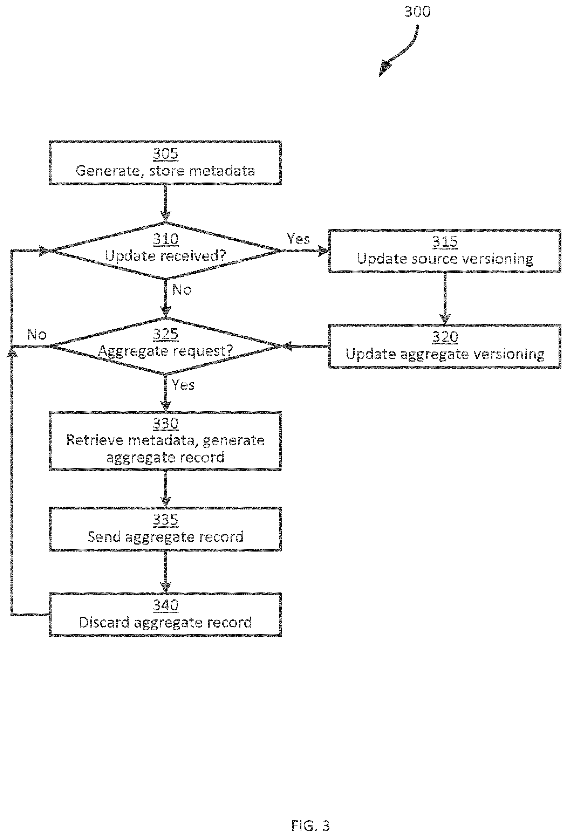

Turning to FIG. 3, a method 300 of versioning ephemeral aggregated data records is illustrated. The method 300 is described below in connection with its example performance in the system 100. In particular, the blocks of the method 300 are performed by aggregator 132 via the execution of the application 216 by the processor 200.

At block 305, the aggregator 132 is configured to generate and store metadata defining an aggregated data object. As noted above, aggregated data objects are not stored persistently at the aggregator 132. The metadata generated at block 305, e.g., in response to an instruction to create an aggregated data object (the content and processing of which is outside the scope of this discussion), indicates which source records contribute to the aggregated data object, as discussed in greater detail below. The aggregator 132 can also obtain the source records themselves, e.g., for storage in the repository 212. As mentioned earlier, the source data objects can be hosted at the aggregator (e.g., instead of at the suppliers 104), or can be synchronized to the repository 212 at the aggregator 132 from the repositories 108.

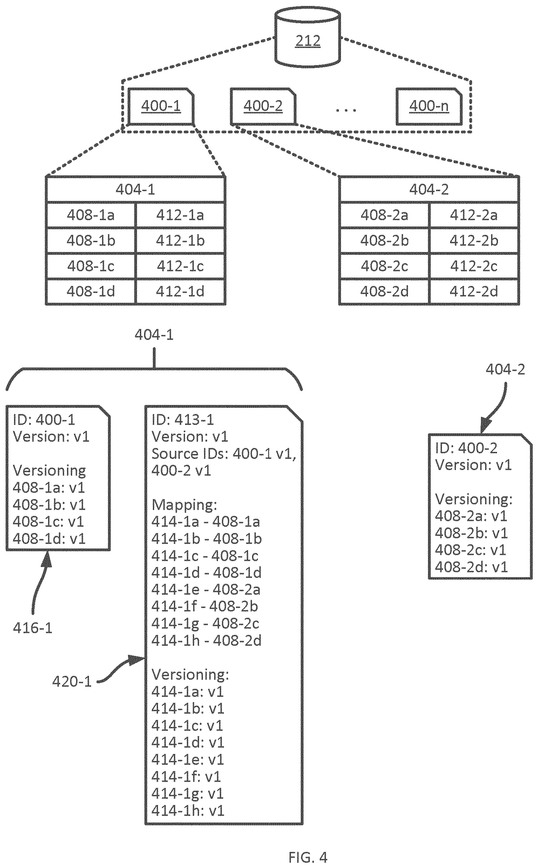

FIG. 4 illustrates partial exemplary contents of the repository 212, including a first source record 400-1, and a second source record 400-2. As will be apparent to those skilled in the art, the repository 212 can contain any number of additional source records 400, up to a source record 400-n. Each source record 400, as illustrated in connection with the source records 400-1 and 400-2, includes metadata 404 (thus, the source record 400-1 includes metadata 404-1, and the source record 400-2 includes metadata 404-2), the content of which is discussed below. Each record 400 also includes a plurality of name-value pairs, each of which can include a field identifier 408, and a corresponding value 412. The number of fields 408 and corresponding values 412 can vary widely, and need not be equal between records 400. Each field 408 can correspond to a particular type of information, e.g., a telephone number, an email address, a flight identifier, a passenger name, and so on.

The record 400-1 includes four name-value pairs defined by field identifiers 408-1a, 408-1b, 408-1c, and 408-1d, with respective values 412-1a, 412-1b, 412-1c, and 412-1d. The record 400-2 also includes four name-value pairs defined by field identifiers 408-2a, 408-2b, 408-2c, and 408-2d, with respective values 412-2a, 412-2b, 412-2c, and 412-2d. As indicated by the letters appended to the reference numbers above, the fields 408-1c and 408-2c may, for example, contain the same type of data (e.g., telephone numbers), but the values 412-1c and 412-2c may be different (e.g., containing telephone numbers for two different passengers). Certain values 412 can also be null. That is, the records 400 need not contain data corresponding to every field identifier 408.

The metadata 404-1 and 404-2 is shown in expanded form in the lower portion of FIG. 4. As will be apparent to those skilled in the art, the structure and formatting of the records 400 and the contents thereof need not be implemented as shown in FIG. 4. Indeed, the records 400 can have different formats from one another in some examples. The illustrated contents of the records in FIG. 4 is provided in order to illustrate which information is included in certain portions of the records 400, rather than to prescribe a specific organizational scheme for any given record 400.

The metadata 404-2 indicates, for the source record 400-2, an identifier of the record 400-2 that can be used by external entities (e.g., the client subsystem 120 and/or the suppliers 104) to retrieve or otherwise manipulate the source record 400-2. The metadata 404-2 also includes a version number of the record 400-2. The repository 212 can contain a plurality of versions of any given record 400. As will be seen in the discussion below, various update operations may modify the values 412 of a record, and each such operation leads to the generation of a new version of that record. One or more previous versions of the record 400 can be maintained in the repository 212. For example, the repository 212 can be configured to maintain a complete history of each record 400 (e.g., every previous version of the record 400). In other examples, the repository 212 can maintain a configurable number of most recent versions (e.g., the most recent five versions of a record 400).

The metadata 404-2 also includes versioning information for each field 408-2. The versioning information indicates, for each field 408-2 of the record 400-2, the version of the record 400-2 for which the corresponding value 412-2 was last updated. In the example shown in FIG. 4, only one version of the record 400-2 is stored in the repository 212 (that is, the first version, indicated by the string "v1"), and the versions associated with each field 408-2 are therefore necessarily also v1.

Some records 400 include metadata with contents functionally equivalent to the metadata 400-2, that is, indicating the version of the relevant record 400, and which version each field 408 was last updated in. Other records, like the record 400-1, include additional information in the metadata 404. FIG. 4 shows that the metadata 404-1 includes source record metadata 416-1 that is functionally similar to the metadata 404-2. The source record metadata 416-1, that is, includes an identifier of the record 400-1, a version number for the record 400-1 (e.g., "v1"), and versioning information for each field 408-1 of the record 400-1.

The metadata 404-1 also includes, in this example, aggregated record metadata 420-1. The metadata 420-1 defines an aggregated data record representing a combination of two or more source records 400. The metadata 420-1 includes an identifier (e.g., 413-1 in this example, although in some examples the identifier of the aggregated record can be equal to the identifier of the record 400-1), and a version (e.g., v1 in this example). The metadata 420-1 also includes source identifiers corresponding to the source records 400 that contribute to the aggregated data record. In this example, the source identifiers indicate that the aggregated data record is formed from the source records 400-1 and 400-2. In addition, the source identifiers indicate which versions of the source records are used to generate the aggregated data record.

The metadata 420 further includes a mapping between fields 414 of the aggregated record, and fields 408 of the source records 400. Thus, in this example, the aggregated data record includes eight fields 414-1a, 414-1b, 414-1c, 414-1d, 414-1e, 414-1f, 414-1g, and 414-1h. The values contained in those fields 414 are values 412 from the source records, as specified in the mapping. Thus, for example, the value in the field 414-1f of the aggregated record is the value 412-2b of the source record 400-2. Although in this example, each of the eight fields 414-1 corresponds to a different one of the eight fields 408 in the records 400-1 and 400-2, in some examples, a single field 414-1 can map to more than one field 408. In such examples, the corresponding fields 408 must contain the same values 412.

The metadata 420-1 can be contained in each contributing source record 400 in some examples. In others, as illustrated in FIG. 4, the metadata 420-1 is contained only in a "master" source record of the aggregated record, which in this case is the source record 400-1. As will be apparent, any number of aggregated records can be defined in the repository 212, via additional sets of metadata 420 contained in at least one of the contributing source records 400.

Returning to FIG. 3, the performance of block 305 may therefore include receiving a request, at the aggregator 132, to generate an aggregated record including the content of the source records 400-1 and 400-2, and in response generating the metadata 420-1 for storage in the record 400-1. The aggregated record itself is not stored persistently in the repository 212, e.g., in the form of a set of name-value pairs as with the source records 400. Instead, only a definition that can be used to build the aggregated record is stored.

At block 310, the aggregator 132 can be configured to determine whether any updates to a source record 400 that is associated with metadata 420 have been received. In the example of FIG. 4, at block 310 the aggregator 132 is configured to determine whether either or both of the source records 400 have been updated. Various update mechanisms can lead to an affirmative determination at block 310, examples of which are described below. When the determination at block 310 is affirmative, at block 315 the aggregator 132 is configured to update the versioning information of any updated source objects 400 identified in the metadata 420. Further, at block 320 the aggregator 132 is configured to update the versioning information in the metadata 420 itself.

Example performances of blocks 315 and 320 are discussed further below. In the present example performance of the method 400, the determination at block 310 is negative, and the aggregator 132 proceeds directly to block 325, bypassing blocks 315 and 320. At block 325, the aggregator 132 is configured to determine whether any other entity (e.g., the client subsystem 120) has requested the aggregated record defined by the metadata 420-1. When the determination at block 325 is negative, the aggregator 132 can return to block 310. As will be understood by those skilled in the art, the aggregator 132 may perform any number of instances of the method 400, e.g., for each aggregated record defined in respective sets of metadata 420.

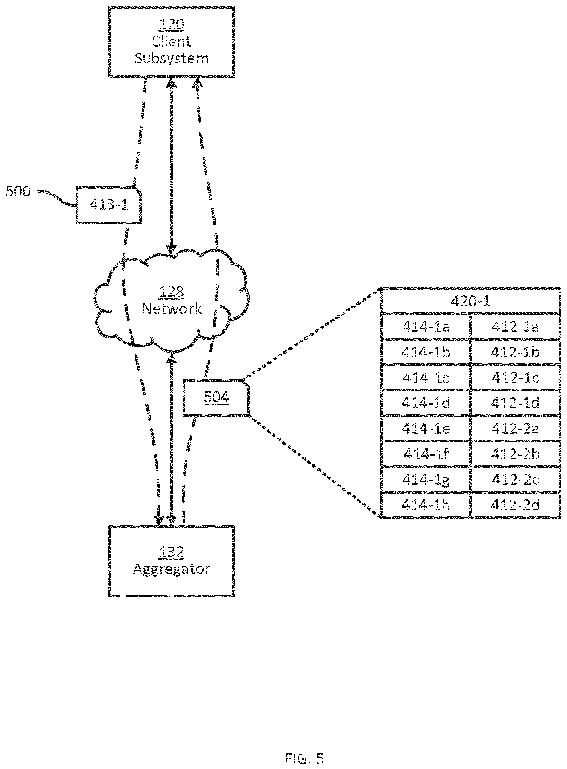

When the determination at block 325 is affirmative, the aggregator 132 proceeds to block 330. At block 330, the aggregator 132 is configured to retrieve the metadata 420 corresponding to the requested aggregated record, and to generate the aggregated record based on the metadata 420. At block 335, the aggregator 132 is configured to send the aggregated record generated at block 330 to the requesting entity. Referring to FIG. 5, a portion of the system 100 is shown, including the client subsystem 120 and the aggregator 132. In response to a request 500 from the client subsystem 120, containing the identifier "413-1", the aggregator 132 is configured to retrieve the metadata 420-1 (which contains the record identifier 413-1). The aggregator 132 is then configured to generate an aggregated record 504 based on the mapping information in the metadata 420-1. As seen in FIG. 5, the aggregated record 504 can include the metadata 420-1, or can include only a subset of the metadata 420-1 in some examples. The aggregated record 504 also includes a set of eight fields 414, and corresponding values 412, as defined in the mapping information.

Referring again to FIG. 3, at block 340, following transmission of the aggregated record 504 to the client subsystem 120, the aggregator 132 discards the aggregated record 504. That is, as stated previously, the aggregated record 504 is not stored persistently in the repository 212 or elsewhere at the aggregator 132. Instead, aggregated records are generated on demand, and are ephemeral, persisting only long enough to be transmitted to requesting entities.

The provision of the metadata 420-1 to the client subsystem 120 (or any other entity in the system 100), or at least of the versioning information contained in the metadata 420-1, may permit the client subsystem 120 to employ the versioning information in any of a variety of processes. For example, the client subsystem 120 may implement a publication process configured to notify a further computing device (e.g., corresponding to a traveler or the like) when certain values 412 have been updated. The aggregator 132 itself may also be configured to implement such a process. In the absence of versioning information for the aggregated data record, determining whether the relevant data type has been updated may be impossible, or may be feasible but involve costly computations involving the comparisons of version numbers, timestamps and the like, between the relevant source records 400.

Following the performance of block 340, the aggregator 132 returns to block 310 to await further updates to the source records 400 and/or (at block 325) requests for the aggregated record 504. In a subsequent performance of block 310, an affirmative determination may result from various update mechanisms. For example, a source record 400 can be updated, e.g., by a supplier 104 or the like. In that context, a supplier 104 may send an update to the aggregator 132 identifying the affected source record(s) 400, and the aggregator 132 can apply the updates to the affected record(s) in the repository 212. In other words, updates may occur independently of the aggregated data record.

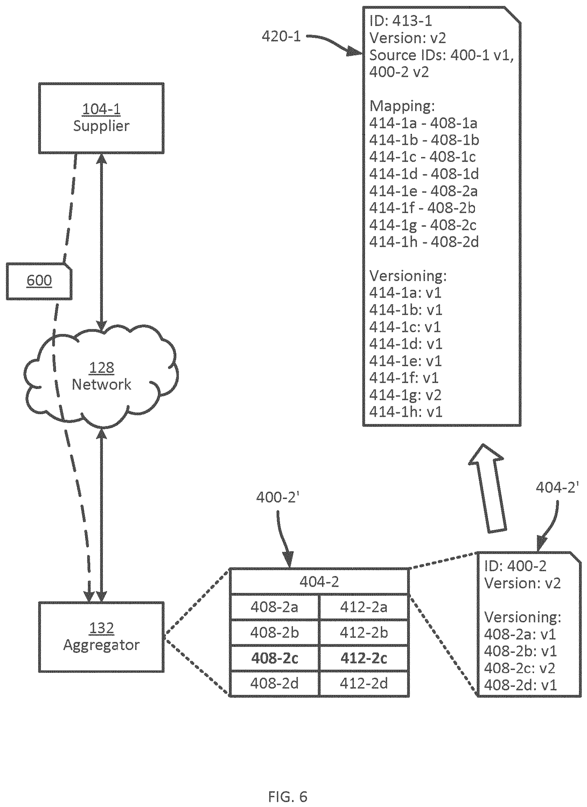

Turning to FIG. 6, for example, the supplier 104-1 is shown transmitting an update message 600 to the aggregator 132, indicating an update to the value 412-2c in the source record 400-2. At block 315, the aggregator 132 is configured to update the source record 400-2. Specifically, the aggregator is configured to generate a source record 400-2', maintaining the original source record 400-2 as described above in connection with FIG. 4. The source record 400-2' includes the updated value 412-2c in the field 408-2c, as well as the previous values 412-2a, 412-2b, and 412-2d. The source record 400-2' also includes metadata 404-2', indicating an incremented version number v2. The versioning information of the metadata 404-2' also indicates that the field 408-2c was updated in the second version of the source record 400-2 (that is, the source record 400-2'), while the remaining fields were last updated in the first version, v1.

At block 320, the aggregator 132 is configured to update the metadata 420-1 defining the aggregated record 504. The aggregator 132 can, for example, locate the metadata 420-1 in the source record 400-1 by searching for references to the source record 400-2 in the repository 212. The metadata 420-1 is updated by incrementing the version number corresponding to the aggregated record 504 (to v2, in this example), and by indicating that the field 414-1g (corresponding to the field 408-2c of the source record 400-2) was last updated at the second version of the aggregated record 504. The source identifiers are also updated to indicate that the aggregated record 504 is based on the first version of the source record 400-1, and the second version of the source record 400-2. Updating the metadata 420-1 does not, in this example, mean that a new version of the source record 400-1 is created, as none of the values 412 of the source record 400-1 itself have changed.

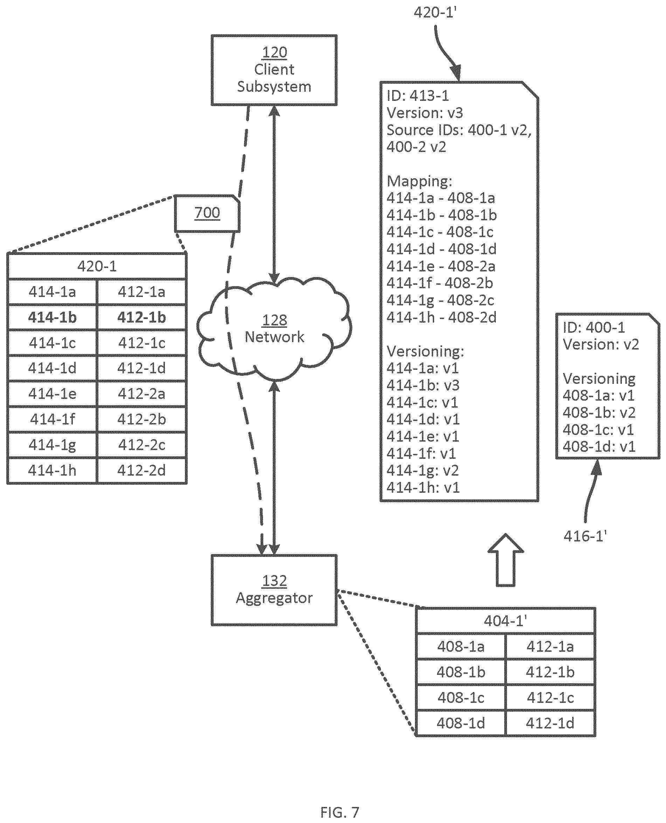

FIG. 7 illustrates a further example performance of blocks 315 and 320, in response to an update initiated relative to the aggregated record 504. For example, the client subsystem 120 may send an update request 700 to the aggregator 132, including an updated version of the aggregated object 504 in which the value 412-1b has been updated. The aggregator 132, in response, updates the source record 400-1 (based on the mapping information in the metadata 420-1). The aggregator 132 also generates update source metadata 416-1' include an incremented version number v2, and an indication that the field 408-1b was last updated in the second version of the record 400-1. In addition, the aggregator 132 generates update metadata 420-1', stored in the source record 400-1'. The metadata 420-1' increments the version number again (relative to that shown in FIG. 6), to v3, and indicates that the field 414-1b was last updated in the third version of the aggregated object 504. Thus, a complete update history of each field 414 in the aggregated record 504 is provided, without the need to store any versions of the aggregated record 504 itself.

The scope of the claims should not be limited by the embodiments set forth in the above examples, but should be given the broadest interpretation consistent with the description as a whole.

## Claims

1. A method comprising:
obtaining, via a computing device, at a database, different respective versions of two or more associated data objects when respective elements thereof are changed, an element of the different respective versions of the two or more associated data objects stored with a respective version number of a respective data object at which the element was changed;
as the different respective versions are generated, generating, via the computing device, at the database, versions of metadata representing associated versions of an aggregated data object that combines the respective elements of the two or more associated data objects, a latest version of the metadata comprising identifiers of the respective elements stored in association with respective aggregated data object version numbers of an aggregated data object version at which the respective elements were changed;
generating, via the computing device, a respective latest version of the aggregated data object from the latest version of the metadata;
providing, via the computing device, the respective latest version of the aggregated data object, to an applications computing device that relies on the respective elements and the respective aggregated data object version numbers; and, thereafter,
deleting, via the computing device, the respective latest version of the aggregated data object.

2. The method of claim 1, further comprising:
comparing the latest version of the metadata to version processing requirements of the applications computing device,
wherein generating of the respective latest version of the aggregated data object, and providing the respective latest version of the aggregated data object to the applications computing device occurs in response to the latest version of the metadata meeting the version processing requirements.

3. The method according to claim 1 or claim 2, further comprising:
receiving an update corresponding to the aggregated data object;
generating, at the database, a new version of the metadata that includes the update stored in association with a new aggregated data object version number; and
generating, at the database, latest respective versions of at least one of the two or more associated data objects that incorporate the update stored in association with a respective new version number of the at least one of the two or more associated data objects.

4. The method of claim 3, wherein receiving the update includes: receiving an update to one of the associated data objects.

5. The method according to claim 3 or claim 4, wherein receiving the update includes: receiving an update to the aggregated data object.

6. The method according to one of the claims 1 to 5, further comprising: storing the metadata within at least one of the associated data objects.

7. A computing device, comprising:
a memory storing a database;
a processor configured to:
obtain different respective versions of two or more associated data objects when respective elements thereof are changed, an element of the different respective versions of the two or more associated data objects stored with a respective version number of a respective data object at which the element was changed;
as the different respective versions are generated, generate, at the database, versions of metadata representing associated versions of an aggregated data object that combines the respective elements of the two or more associated data objects, a latest version of the metadata comprising identifiers of the respective elements stored in association with respective aggregated data object version numbers of an aggregated data object version at which the respective elements were changed;
generate a respective latest version of the aggregated data object from the latest version of the metadata;
provide the respective latest version of the aggregated data object, to an applications computing device that relies on the respective elements and the respective aggregated data object version numbers; and, thereafter,
delete the respective latest version of the aggregated data object.

8. The computing device of claim 7, wherein the processor is configured to:
compare the latest version of the metadata to version processing requirements of the applications computing device,
generate the respective latest version of the aggregated data object, and provide the respective latest version of the aggregated data object to the applications computing device, in response to the latest version of the metadata meeting the version processing requirements.

9. The computing device according to claim 7 or claim 8, wherein the processor is configured to:
receive an update corresponding to the aggregated data object;
generate, at the database, a new version of the metadata that includes the update stored in association with a new aggregated data object version number; and
generate at the database, latest respective versions of at least one of the two or more associated data objects that incorporate the update stored in association with a respective new version number of the at least one of the two or more associated data objects.

10. The computing device of claim 9, wherein the processor is configured to receive the update by: receiving an update to one of the associated data objects.

11. The computing device according to claim 9 or claim 10, wherein the processor is configured to receive the update by: receiving an update to the aggregated data object.

12. The computing device according to one of the claims 7 to 11, wherein the processor is configured to: store the metadata within at least one of the associated data objects.
